# EUROPEAN PATENT SPECIFICATION

(11) **EP 2 689 146 B1**
(45) Date of publication and mention of the grant of the patent: **18.05.2016**
(21) Application number: 12713482.3
(22) Date of filing: 20.03.2012
(51) Int. Cl.: F16B 5/12, F16B 21/08, B60R 21/213

(54) **Fastening clip**
Befestigungsclip
Clip de fixation

(30) Priority: 21.03.2011 ES 201100318 P
(43) Date of publication of application: 29.01.2014
(73) Proprietor: Illinois Tool Works Inc., Glenview, IL 60025 (US)
(72) Inventor: ORTEGA DOÑA, Raúl, 08760 Martorell (Barcelona) (ES)
(74) Representative: Canela Giménez, Teresa
(86) International application number: PCT/US2012/029813
(87) International publication number: WO 2012/129233

(56) References cited:
- WO-A1-2010/101803
- US-A- 2 618 824

## Description

### BACKGROUND OF THE INVENTION

This invention proposes improvements to the legs of fastening clips, such as those used to fasten panels and/or to fasten accessories to panels, especially clips for vehicle airbags, in which the base and shape of said legs have been modified to improve the functional properties thereof.

### DESCRIPTION OF THE PRIOR ART

Quick-fastening clips used to fasten panels and accessories to panels have various characteristic features in common. In the type of clip concerned by the improvements proposed by this invention, the panel is clamped elastically between flanges of the clip that press on the hidden or inside surface of the panel, and flexible legs that press on the outside face, opposite the inside face of said panel. The clip and the elements attached thereto, or the above-described clamp, are thereby fastened to the panel.

Although the improvements to which this invention relates are applicable to a wide variety of clips, they are especially useful for "airbag clips", i.e. clips used to fasten the components of the airbag system.

One such clip is the subject of Spanish patent application P0201009999, in which the clip flexion legs are bent, and crossed, representing an improvement over prior art clips as said flexion legs have greater flexibility and take up less space while being longer.

Another clip according to the preamble of claim 1 is known from document WO2010/101803 A1.

This invention primarily aims to improve said type of flexion leg, increasing the performance thereof even further.

Other advantages of this invention shall become evident in the course of the following description.

### SUMMARY OF THE INVENTION

This invention as defined by a clip comprising the features of claim 1 proposes improvements to the legs of fastening clips, such as those used to fasten accessories to panels and/or to fasten panels, especially clips for vehicle airbags, in which the crossed flexion legs of said clips are modified, one of them forming a ring that encircles the other leg. Said legs start from the base of the clip which provides an extended surface in one of the two transverse directions of the clip.

This base may have structural reinforcement means in the form of a hollow or fold.

### BRIEF DESCRIPTION OF THE DRAWINGS

To facilitate comprehension of the invention, this description is accompanied by several sheets of drawings, provided merely by way of non-limiting illustration of the invention.

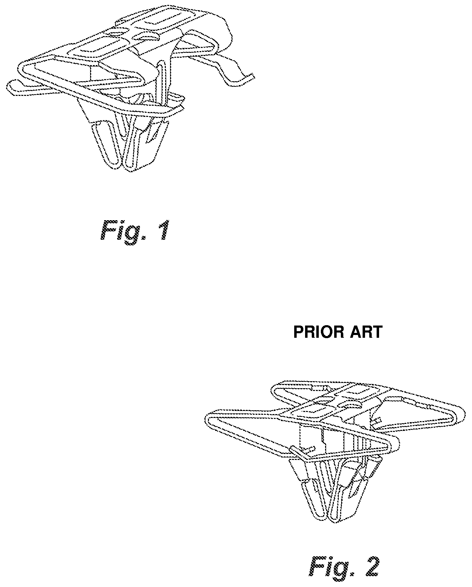

Figures 1 and 2 show perspective views of clips according to the prior art, in particular those disclosed by Spanish patent application P0200900630, mentioned above.

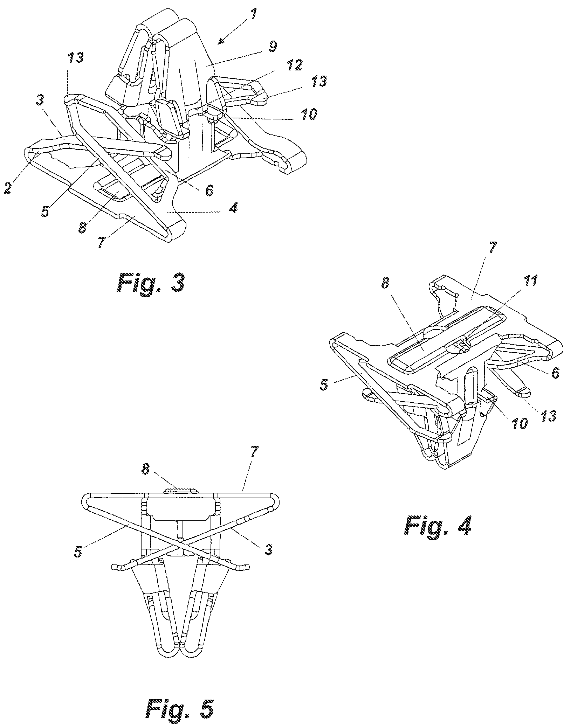

Figures 3 and 4 show perspective views of a clip like that described in figure 1, but incorporating the improvements that characterize this invention.
Figure 5 is a front view of the embodiment of the clip of figures 3 and 4.
Figures 6 and 7 show a clip according to a preferred embodiment of this invention, adapted to different panel thicknesses.

### DETAILED DESCRIPTION OF THE INVENTION

The invention consists of improvements to the legs of fastening clips, such as those used to fasten accessories to panels and/or to fasten panels, especially clips for vehicle airbags, in which one leg (4) of each set of two of said flexion legs (2), which are opposite one another and crossed, is shaped so as to encircle the other leg (3).

As can be seen in the attached figures, said flexion legs (2) come in sets of two individual legs (3 and 4) which are crossed, roughly forming an "X", one (4) of said legs being divided into two branches (5 and 6) forming an approximately elliptical closed perimeter, through which the other leg (3) is inserted. Said leg (4) ends in a bent portion (13) shaped so as not to damage the abovementioned panel on which it presses.

These legs (3 and 4) start from the base (7) of the clip, which extends further in the longitudinal direction than in the transverse direction. Said base (7) may include structural reinforcements to reinforce the surface thereof, such as hollows (8) or folds. The base (7) has a degree of elasticity and may, when required for certain purposes, have a slightly concave or inverted "V" shape, when the clip is viewed from a distance, helping increase the elasticity thereof by acting as a sort of spring. In the preferred embodiment of the invention, as shown in the attached figures, said base (7) is flat.

The clip which incorporates the improvements of this invention, for example that shown in the figures, has other features that do not pertain to the subject matter of this invention but are necessary for the clip to function correctly. This is the case of the wings (9) of the clip (1), the ledges (10) for abutting against the top of the panel, and the mechanism for releasing the clip from the panel. In the clip shown in the attached figures, the release mechanism comprises a pair of holes (11) that are accessible from outside the panel and can be operated with a tool that acts on projecting parts (12) of said wings (9), causing them to contract and releasing the clip (1) from the panel.

As stated above, other structures different to those described in the above paragraph are possible, without altering the essence of the invention.

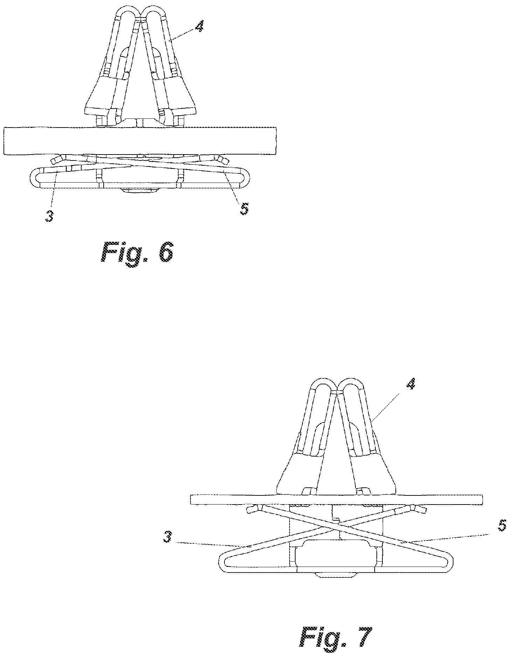

The structural improvement resulting from the improvements proposed in this invention has various advantages. One advantage is that it prevents pieces from getting entangled, for example when they are being fitted or when several pieces are stored in the same container for packaging or transport purposes.
Another advantage of this structural arrangement is an increase in the inertial capacity, flexibility and strength of said flexion legs (2), mainly owing to the increase in material used to make them, which ultimately means that less force is needed to insert the clip (1) in the panel.
Another such advantage is the greater range of thicknesses for which a clip according to this invention may be used. The attached figures 6 and 7 show two different cases of panel thicknesses and show how the clip of said practical embodiment advantageously adapts to these thicknesses.
Moreover, the existence of a base (7) which extends further in the longitudinal direction and has flexion legs (2) that are further from the center of the clip gives the legs, and the clip as a whole, greater elasticity.

## Claims

1. Clip for fastening accessories to panels and/or for fastening panels, especially clip for vehicle airbags, said clip (1) having at least one set of two flexion legs (2) with two individual legs (3 and 4) which are opposite one another and crossed, roughly forming an "X", **CHARACTERIZED IN THAT** one (4) of said individual legs is divided into two branches (5 and 6) forming an approximately elliptical closed perimeter, through which the other leg (3) is inserted.

2. Clip as claimed in claim 1, **CHARACTERIZED IN THAT** the base (7) of said clip (1) extends further in the longitudinal direction than in the transverse direction, and said legs (3 and 4) start from near the end of said more extended longitudinal direction.

3. Clip as claimed in claim 2, **CHARACTERIZED IN THAT** said base (7) may include structural reinforcements to reinforce the surface thereof, such as hollows (8) or folds.

4. Clip as claimed in the preceding claims, **CHARACTERIZED IN THAT** said flexion legs (2) end in a bent portion (13) shaped so as not to damage the surface of the panels.

5. clip as claimed in the preceding claims 2 to 4, **CHARACTERIZED IN THAT** said base (7) is flat.

6. Clip as claimed in claims 2 to 4, **CHARACTERIZED IN THAT** said base (7) has a slightly concave or inverted "V" shape, when the clip is viewed from a distance.

## Patentansprüche

1. Clip zum Befestigen von Zubehör an Platten und/oder zum Befestigen von Platten, insbesondere ein Clip für Fahrzeug-Airbags, wobei der Clip (1) mindestens zwei Biegeschenkel (2) mit zwei einzelnen Schenkeln (3 und 4) aufweist, die einander gegenüber und gekreuzt sind und grob ein "X" formen, **dadurch gekennzeichnet, dass** einer (4) der einzelnen Schenkel in zwei Zweige (5 und 6) aufgeteilt ist, die einen ungefähr elliptischen geschlossenen Umfang bilden, durch den der andere Schenkel (3) eingeführt wird.

2. Clip nach Anspruch 1, **dadurch gekennzeichnet, dass** sich die Grundplatte (7) des Clips (1) weiter in Längsrichtung als in Querrichtung erstreckt und dass die Schenkel (3 und 4) in der Nähe des Endes der ausgedehnteren Längsrichtung starten.

3. Clip nach Anspruch 2, **dadurch gekennzeichnet, dass** die Grundplatte (7) Strukturverstärkungen zum Verstärken der Oberfläche davon aufweisen kann, wie Hohlräume (8) oder Faltungen.

4. Clip nach einem der vorstehenden Ansprüche, **dadurch gekennzeichnet, dass** die Biegeschenkel (2) in einem gebogenen Abschnitt (13) enden, der geformt ist, um die Oberfläche der Platten nicht zu beschädigen.

5. Clip nach einem der vorstehenden Ansprüche 2 bis 4, **dadurch gekennzeichnet, dass** die Grundplatte (7) flach ist.

6. Clip nach einem der Ansprüche 2 bis 4, **dadurch gekennzeichnet, dass** die Grundplatte (7) eine leicht konkave oder umgekehrte V-Form aufweist, wenn der Clip aus einem Abstand betrachtet wird.

## Revendications

1. Agrafe destinées à fixer des accessoires à des panneaux et/ou à fixer des panneaux, en particulier agrafe pour coussins gonflables de sécurité pour véhicules, ladite agrafe (1) comprenant au moins un ensemble de deux pattes (2) de flexion doté de deux pattes individuelles (3 et 4) qui sont opposées l'une à l'autre et croisées, formant approximativement un "X", **caractérisée en ce que** une (4) desdites pattes individuelles est divisée en deux branches (5 et 6) formant un périmètre fermé approximativement elliptique, à travers lequel est insérée l'autre patte (3) .

2. Agrafe selon la revendication 1, **caractérisée en ce que** la base (7) de ladite agrafe (1) s'étend davantage dans la direction longitudinale que dans la direction transverse, et **en ce que** lesdites pattes (3 et 4) partent d'un emplacement proche de l'extrémité de ladite direction longitudinale plus étendue.

3. Agrafe selon la revendication 2, **caractérisée en ce que** ladite base (7) peut comprendre des renforts structuraux servant à renforcer sa surface, tels que des creux (8) ou des plis.

4. Agrafe selon les revendications précédentes, **caractérisée en ce que** lesdites pattes (2) de flexion se terminent en une partie coudée (13) mise en forme de façon à ne pas endommager la surface des panneaux.

5. Agrafe selon les revendications 2 à 4 précédentes, **caractérisée en ce que** ladite base (7) est plate.

6. Agrafe selon les revendications 2 à 4, **caractérisée en ce que** ladite base (7) présente une forme légèrement concave ou en "V" inversé, lorsque l'agrafe est vue à une certaine distance.
